# FASCICULE DE BREVET EUROPEEN

(11) **EP 3 739 785 B1**
(45) Date de publication et mention de la délivrance du brevet: **28.09.2022**
(21) Numéro de dépôt: 20173978.6
(22) Date de dépôt: 11.05.2020
(51) Int. Cl.: H04L 1/16

(54) **PROCÉDÉ D'ACQUITTEMENT DE TRAMES**
VERFAHREN ZUR BESTÄTIGUNG VON DATENRAHMEN
METHOD FOR ACKNOWLEDGEMENT OF FRAMES

(30) Priorité: 13.05.2019 FR 1904959
(43) Date de publication de la demande: 18.11.2020
(73) Titulaire: Sagemcom Energy & Telecom SAS, 92500 Rueil-Malmaison (FR)
(72) Inventeur: TEBOULLE, Henri, 92500 Rueil Malmaison (FR)
(74) Mandataire: Cabinet Le Guen Maillet

(56) Documents cités:
- US-A1- 2019 104 472
- US-B1- 9 942 010
- "9. Frame formats 9.1 General requirements", IEEE DRAFT; REVMD_CL_09.FM, IEEE-SA, PISCATAWAY, NJ USA , vol. 802.11md drafts; 802.11 drafts; 802.11m drafts, no. D2.2 7 mai 2019 (2019-05-07), pages 1-236, XP068150676, Extrait de l'Internet: URL:http://www.ieee802.org/11/private/Draf t_Standards/11md/Draft%20P802.11REVmd_D2.2 .rtfs.zip REVmd_Cl_09.fm.rtf [extrait le 2019-05-07]

## Description

L'invention concerne un procédé d'acquittement de trames émises par des terminaux d'un groupe de terminaux à destination d'un serveur d'applications, chaque terminal dudit groupe communicant avec le serveur d'applications via une passerelle et un serveur centralisateur, des dispositifs et un système mettant en œuvre ledit procédé.

L'Internet se transforme progressivement en un réseau étendu, appelé « Internet des objets », reliant toutes sortes d'objets devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (marque déposée) («Long Range » en terminologie anglo-saxonne). La technologie LoRa opère sur des bandes de fréquences connues sous l'appellation « *Bande ISM* » (Industrie, Science et Médical) comprenant des bandes de fréquences pouvant être utilisées librement pour des applications industrielles, scientifiques et médicales. La technologie LoRa est basée sur une technologie d'étalement de spectre permettant d'obtenir des communications bas débit ayant une bonne robustesse dans une bande ISM particulièrement bruitée.

Un réseau basé sur la technologie LoRa (appelé « réseau LoRa » par la suite) utilise un protocole appelé LoRaWAN (*LoRaWAN 1.1 Specification, final release, 11 octobre 2017*). Un réseau LoRa est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et de les remonter vers au moins un serveur (« LoRa Network Server (LNS) » en terminologie anglo-saxonne), appelé serveur LNS ou serveur centralisateur par la suite, qui les traitera ou les retransmettra à un ou plusieurs serveurs d'applications.

Dans un fonctionnement classique d'un réseau LoRa, un terminal désirant transmettre un message (*i.e.* des données) au serveur LNS ou à un serveur centralisateur via le serveur LNS, transmet ce message dans une trame, dite trame montante, conforme au protocole LoRaWAN. La trame montante conforme au protocole LoRaWAN, dite trame LoRa montante, est transmise en mode multidiffusion (« broadcast » en terminologie anglo-saxonne). Cette trame LoRa montante est reçue par au moins une passerelle. Chaque passerelle ayant reçu la trame LoRa montante, la décode et retransmet le message contenu dans ladite trame au serveur dans une requête HTTP (protocole de transfert hypertext, « HyperText Transfer Protocol » en terminologie anglo-saxonne), dite requête HTTP montante. Si plusieurs passerelles ont reçu la trame LoRa montante, le serveur LNS reçoit plusieurs requêtes HTTP montantes contenant le même message. Le serveur LNS doit alors désigner parmi les passerelles ayant reçu la trame LoRa montante, la passerelle à utiliser pour relayer une réponse au message contenu dans la trame LoRa montante. La réponse est transmise du serveur LNS à la passerelle désignée dans une requête HTTP descendante, puis en point à point, de la passerelle désignée au terminal dans une trame descendante conforme au protocole LoRaWAN, dite trame LoRa descendante. Dans une majorité d'implémentations des réseaux LoRa, la passerelle désignée est celle offrant la qualité de transmission la meilleure avec le terminal ayant émis la trame LoRa montante.

Le protocole LoRaWAN définit trois classes de fonctionnement : les classes A, B et C. La classe A est la plus économique en termes de consommation énergétique. Lorsqu'un terminal a des données à envoyer il le fait sans contrôle puis il ouvre deux fenêtres d'écoute successives pour des éventuels messages provenant du serveur LNS. Ces deux fenêtres ont des durées recommandées de « 1 » puis « 2 » secondes. Ces deux fenêtres sont les seules durant lesquelles le serveur peut envoyer au terminal des données qu'il a précédemment stockées à son attention. La classe A doit être implémentée dans tous les terminaux par souci de compatibilité.

La classe B permet un bon compromis entre consommation énergétique et besoin en communication bidirectionnelle. Les terminaux fonctionnant en classe B ouvrent des fenêtres de réception à des intervalles programmés par des messages périodiques envoyés par le serveur LNS.

La classe C a la plus forte consommation énergétique puisque les terminaux sont en permanence en écoute ce qui permet d'effectuer des communications à tous moments.

On note qu'un équipement peut changer de classe en cours de fonctionnement.

Le brevet US 9 942 010 B1 traite d'un procédé de communication entre des stations STA et un point d'accès AP d'un réseau local sans fil de type WLAN. Les protocoles d'échanges décrits dans ce document utilisent des accusés de réception. La demande de brevet US 2019 /104472 A1 décrit une méthode sécurisée de mise en service dans un réseau de type LPWAN. de longue portée et faible consommation d'énergie.

Plusieurs terminaux peuvent contribuer à une même application gérée par un même serveur d'applications. Actuellement, un serveur d'applications souhaitant acquitter des trames reçues de plusieurs terminaux pour une même application doit acquitter chaque trame une à une. Outre l'aspect fastidieux d'une telle méthode d'acquittement, cette méthode monopolise de manière non négligeable des ressources réseaux.

Il est souhaitable de pallier ces inconvénients de l'état de la technique. Il est notamment souhaitable de proposer une méthode d'acquittement efficace.

Il est par ailleurs souhaitable de proposer une méthode qui soit simple à mettre en œuvre et à faible coût.

Selon un premier aspect de la présente invention, la présente invention concerne un procédé d'acquittement de trames émises par des terminaux d'un groupe de terminaux à destination d'un serveur d'applications, chaque terminal dudit groupe communicant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le procédé est exécuté par le serveur centralisateur et comprend : recevoir au moins un message d'acquittement émis par le serveur d'applications, chaque message d'acquittement acquittant une pluralité de trames émises par des terminaux dudit groupe, chaque message d'acquittement comprenant une pluralité de champs, un premier champ comprenant une information permettant une mise à l'heure de chaque terminal recevant le message d'acquittement, un deuxième champ comprenant une information fixant une date de prochain réveil de chaque terminal recevant le message d'acquittement, un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et un quatrième champ comprenant une information indiquant pour chaque terminal dudit groupe si chaque trame qu'il a envoyée à destination du serveur d'applications depuis un précédent acquittement est acquittée ; et, transmettre une trame en mode multidiffusion à destination dudit groupe via chaque passerelle permettant de communiquer avec un terminal dudit groupe, ladite trame comprenant pour chaque champ de chaque message d'acquittement reçu, une information représentative de l'information représentée par le dit champ.

En acquittant plusieurs trames émises par les terminaux d'un groupe de terminaux avec une seule trame émise en mode multidiffusion, le procédé d'acquittement ne monopolise pas les ressources réseau.

Selon un mode de réalisation, lorsque le serveur centralisateur reçoit un seul message d'acquittement, la trame transmise en mode multidiffusion comprend le message d'acquittement.

Selon un mode de réalisation, chaque trame destinée à être transmise en mode multidiffusion audit groupe, comprend, dans un champ d'adresse de terminal de ladite trame, une adresse prédéfinie, chaque terminal recevant une trame comprenant l'adresse prédéfinie identifiant cette trame comme une trame émise en mode multidiffusion.

Selon un mode de réalisation, lors de la phase de connexion, le serveur centralisateur répond à chaque trame de demande de connexion émanant d'un terminal dudit groupe par une trame d'autorisation de connexion transmise en point à point au terminal ayant transmis la trame de demande de connexion, la trame d'autorisation de connexion comprenant l'identifiant dudit groupe dans un champ d'adresse de terminal, un champ comprenant une information permettant une mise à l'heure du terminal destinataire de ladite trame d'autorisation et un champ fixant une date de prochain réveil dudit terminal destinataire.

Selon un mode de réalisation, le quatrième champ prend la forme d'un masque binaire dans lequel chaque bit correspond à un terminal dudit groupe, le champ d'adresse de terminal de ladite trame d'autorisation de connexion comprenant en outre une information indiquant au terminal destinataire de ladite trame d'autorisation de connexion une position dans le masque binaire du bit correspondant audit terminal destinataire.

Selon un mode de réalisation, lorsque le serveur d'applications implémente une pluralité d'applications, chaque terminal dudit groupe pouvant contribuer à chaque application de la pluralité d'applications, chaque application implémentée par le serveur d'applications étant associé à un numéro d'application connu par chaque terminal dudit groupe, chaque message d'acquittement comprend un cinquième champ comprenant un identifiant d'application permettant d'identifier l'application parmi la pluralité d'applications pour laquelle des trames sont acquittées.

Selon un deuxième aspect de l'invention, l'invention concerne un procédé d'acquittement de trames émises par des terminaux d'un groupe de terminaux à destination d'un serveur d'applications, chaque terminal dudit groupe communicant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le procédé est exécuté par un terminal, dit terminal courant, dudit groupe et comprend : recevoir une trame d'acquittement, la trame d'acquittement ayant été transmise en mode multidiffusion par le serveur centralisateur et comprenant un message d'acquittement généré à partir d'informations fournies par le serveur d'applications, ledit message étant identique pour chaque terminal dudit groupe et composé d'une pluralité de champs, un premier champ comprenant une information permettant une mise à l'heure du terminal courant, un deuxième champ fixant une date de prochain réveil du terminal courant, un troisième champ comprenant une information représentative d'un identifiant dudit groupe, ledit identifiant ayant été fourni par le serveur centralisateur au terminal courant lors d'une phase de connexion au troisième réseau exécuté par le terminal courant, et un quatrième champ comprenant une information indiquant audit terminal courant si chaque trame qu'il a envoyée à destination du serveur d'applications est acquittée ; mettre à l'heure une horloge interne audit terminal en utilisant le premier champ ; si l'identifiant représenté par l'information représentative de l'identifiant dudit groupe contenu dans le troisième champ correspond à l'identifiant reçu par le terminal courant lors de la phase de connexion, vérifier, en utilisant le quatrième champ, que chaque trame émise depuis un précédent acquittement est acquittée ; et, se mettre en veille jusqu'à la date de prochain réveil indiquée dans le deuxième champ.

Selon un troisième aspect de l'invention, l'invention concerne un procédé d'acquittement de trames émises par des terminaux d'un groupe de terminaux à destination d'un serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le procédé exécuté par le serveur d'applications comprend : générer un message d'acquittement, le message d'acquittement comprenant une pluralité de champs, un premier champ comprenant une information permettant une mise à l'heure de chaque terminal recevant ledit message, un deuxième champ comprenant une information fixant une date de prochain réveil de chaque terminal recevant ledit message, un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et un quatrième champ comprenant une information indiquant pour chaque terminal dudit groupe si chaque trame qu'il a envoyée à destination du serveur d'applications depuis un précédent acquittement est acquittée ; et, émettre une trame comprenant ledit message, les informations comprises dans chaque champ dudit message étant destinées à être transmises à chaque terminal du groupe de terminaux via le serveur centralisateur et chaque passerelle permettant au serveur centralisateur de communiquer avec chaque terminal du groupe de terminaux.

Selon un mode de réalisation, le réseau sans fil à grande portée et permettant une faible consommation d'énergie est un réseau LoRa et le protocole de communication adapté audit réseau est le protocole LoRaWAN.

Selon un quatrième aspect de l'invention, l'invention concerne un dispositif de type serveur centralisateur, permettant d'acquitter des trames émises par des terminaux d'un groupe de terminaux à destination d'un serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le dispositif comprend : des moyens de réception pour recevoir un message d'acquittement émis par le serveur d'applications, ledit message acquittant une pluralité de trames émises par des terminaux dudit groupe, le message d'acquittement comprenant une pluralité de champs, un premier champ comprenant une information permettant une mise à l'heure de chaque terminal recevant ledit message, un deuxième champ comprenant une information fixant une date de prochain réveil de chaque terminal recevant ledit message, un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et un quatrième champ comprenant une information indiquant pour chaque terminal dudit groupe si chaque trame qu'il a envoyée à destination du serveur d'applications depuis un précédent acquittement est acquittée ; et, des moyens de transmission pour transmettre une trame en mode multidiffusion à destination dudit groupe via chaque passerelle permettant de communiquer avec un terminal dudit groupe, ladite trame comprenant, pour chaque champ de chaque message d'acquittement reçu, une information représentative de l'information représentée par le dit champ.

Selon un cinquième aspect de l'invention, l'invention concerne un dispositif de type terminal appartenant à un groupe de terminaux émettant des trames à destination d'un serveur d'applications, chaque terminal dudit groupe communiquant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le terminal, dit terminal courant, comprend : des moyens de réception pour recevoir une trame d'acquittement, la trame d'acquittement ayant été transmise en mode multidiffusion par le serveur centralisateur et comprenant un message d'acquittement généré à partir d'informations fournies par le serveur d'applications, ledit message étant identique pour chaque terminal dudit groupe et composé d'une pluralité de champs, un premier champ comprenant une information permettant une mise à l'heure du terminal courant, un deuxième champ fixant une date de prochain réveil du terminal courant, un troisième champ comprenant une information représentative d'un identifiant dudit groupe, ledit identifiant ayant été fourni par le serveur centralisateur au terminal courant lors d'une phase de connexion au troisième réseau exécuté par le terminal courant, et un quatrième champ comprenant une information indiquant audit terminal courant si chaque trame qu'il a envoyée à destination du serveur d'applications est acquittée ; des moyens pour mettre à l'heure une horloge interne audit terminal courant en utilisant le premier champ ; des moyens pour vérifier, en utilisant le quatrième champ et si l'identifiant représenté par l'information représentative de l'identifiant dudit groupe contenu dans le troisième champ correspond à l'identifiant reçu par le terminal courant lors de la phase de connexion, que chaque trame émise est acquittée ; et, des moyens de mise en veille pour mettre en veille le terminal courant jusqu'à la date de prochain réveil indiquée dans le deuxième champ.

Selon un sixième aspect de l'invention, l'invention concerne un dispositif de type serveur d'applications adapté pour acquitter des trames émises par des terminaux d'un groupe de terminaux à destination dudit serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau. Le dispositif comprend : des moyens pour générer un message d'acquittement, le message d'acquittement comprenant une pluralité de champs, un premier champ comprenant une information permettant une mise à l'heure de chaque terminal recevant ledit message, un deuxième champ fixant une date de prochain réveil de chaque terminal recevant ledit message, un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et un quatrième champ comprenant une information indiquant pour chaque terminal dudit groupe si chaque trame qu'il a envoyée à destination du serveur d'applications depuis un précédent acquittement est acquittée ; ledit message étant destiné à être transmis à chaque terminal du groupe de terminaux via le serveur centralisateur et chaque passerelle permettant au serveur centralisateur de communiquer avec chaque terminal du groupe de terminaux.

Selon un septième aspect de l'invention, l'invention concerne un système comprenant un groupe de terminaux selon le cinquième aspect émettant des trames à destination d'un serveur d'applications selon le sixième aspect, chaque terminal dudit groupe communiquant avec le serveur d'applications via une passerelle et un serveur centralisateur selon le quatrième aspect, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil à grande portée et permettant une faible consommation d'énergie, chaque communication entre un terminal dudit groupe et une passerelle utilisant un protocole de communication adapté audit troisième réseau.

Selon un huitième aspect de l'invention, l'invention concerne un programme d'ordinateur, caractérisé en ce qu'il comprend des instructions pour mettre en œuvre, par un dispositif, le procédé selon le premier aspect, lorsque ledit programme est exécuté par un processeur dudit dispositif.

Selon un neuvième aspect, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système dans lequel est mise en œuvre l'invention ;
- la Fig. 2A illustre schématiquement un module de traitement compris dans un serveur LNS ;
- la Fig. 2B illustre schématiquement un module de traitement compris dans un terminal ;
- la Fig. 2C illustre schématiquement un module de traitement compris dans un serveur d'applications ;
- la Fig. 3 illustre schématiquement un message d'autorisation de connexion selon l'invention ;
- la Fig. 4 illustre schématiquement un champ d'adresse de terminal de la trame d'autorisation de connexion ;
- la Fig. 5 illustre schématiquement un champ d'adresse de terminal d'une trame d'acquittement ;
- la Fig. 6 illustre schématiquement un message d'acquittement ;
- la Fig. 7 illustre schématiquement une procédure de connexion à un réseau LoRa selon l'invention ; et,
- la Fig. 8 illustre schématiquement un fonctionnement d'une procédure d'acquittement selon l'invention.

L'invention est décrite par la suite dans un contexte dans lequel un serveur d'applications reçoit une pluralité de trames émises par des terminaux via des passerelles et un serveur LNS, les passerelles et les terminaux formant un réseau LoRa. L'invention s'applique toutefois dans d'autres contextes pour tous types de réseaux sans fil à grande portée et permettant une faible consommation d'énergie dans lesquels un serveur doit acquitter des trames transmises par une pluralité de terminaux, lesdits terminaux étant le plus souvent dans un mode de veille et passant temporairement en mode actif.

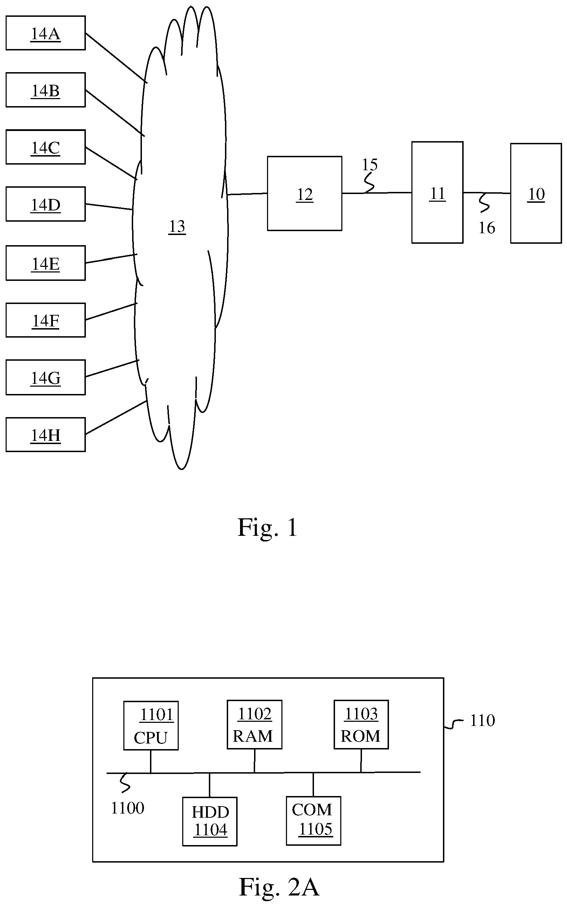

La **Fig. 1** illustre schématiquement un système dans lequel est mise en œuvre l'invention.

Dans l'exemple de la Fig. 1, une pluralité de terminaux 14A, 14B, 14C, 14D, 14E, 14F, 14G et 14H est connectée à une passerelle 12 par un réseau LoRa 13. On note que les communications sur le lien de communication sans fil 13 sont conformes au protocole LoRaWAN.

La passerelle 12 communique avec un serveur 11, dit *serveur LNS,* par l'intermédiaire d'un lien de communication filaire ou sans fil 15.

Le serveur LNS 11 est connecté à un ou plusieurs serveurs 10, dits *serveurs d'applications,* par l'intermédiaire d'un lien de communication filaire ou sans fil 16.

Dans l'exemple de la Fig. 1, la pluralité de terminaux 14A, 14B, 14C, 14D, 14E, 14F, 14G et 14H forme un groupe de terminaux contribuant à une application exécutée par le serveur d'applications 10. Ce groupe de terminaux a par exemple été défini par le serveur applicatif 10. On note que pour simplifier la Fig. 1, le groupe de terminaux ne comprend que « 8 » terminaux. Dans un cas pratique, ce groupe pourrait être composé d'un grand nombre de terminaux. Par exemple, le groupe de terminaux comprend « 256 » terminaux. Dans d'autres modes de réalisation, le groupe de terminaux pourrait comprendre plus « 512 » ou « 1024 » terminaux. De même, dans la Fig. 1 nous avons représenté une seule passerelle 12. Dans un cas pratique, le nombre de passerelles pourrait être plus important et par exemple comprendre une centaine de passerelles.

Par ailleurs, le serveur d'applications 10 pourrait exécuter plusieurs applications en parallèle. Chaque terminal du groupe de terminaux pourrait contribuer à plusieurs applications, ces applications pouvant être exécutées par plusieurs serveurs d'applications.

La **Fig. 2A** illustre schématiquement un exemple d'architecture matérielle d'un module de traitement 110 compris dans le serveur LNS 11.

Selon l'exemple d'architecture matérielle représenté à la Fig. 2A, le module de traitement 110 comprend alors, reliés par un bus de communication 1100: un processeur ou CPU (« Central Processing Unit » en terminologie anglo-saxonne) 1101 ; une mémoire vive RAM (« Random Access Memory » en terminologie anglo-saxonne) 1102 ; une mémoire morte ROM (« Read Only Memory» en terminologie anglo-saxonne) 1103 ; une unité de stockage telle qu'un disque dur ou un lecteur de support de stockage, tel qu'un lecteur de cartes SD (« Secure Digital » en terminologie anglo-saxonne) 1104 ; au moins une interface de communication 1105 permettant au module de traitement 110 de communiquer avec d'autres dispositifs tels que la passerelle 12 et le serveur applicatif 10.

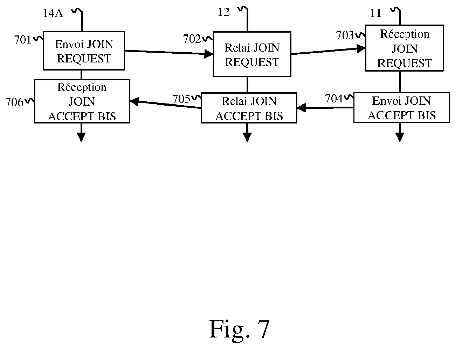

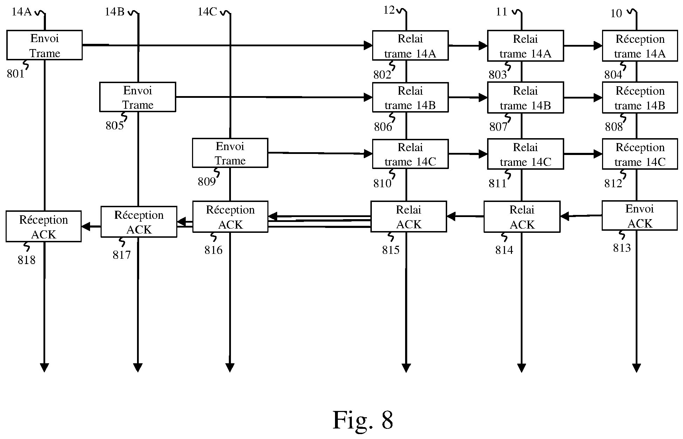

Le processeur 1101 est capable d'exécuter des instructions chargées dans la RAM 1102 à partir de la ROM 1103, d'une mémoire externe (non représentée), d'un support de stockage (tel qu'une carte SD), ou d'un réseau de communication. Lorsque le serveur LNS 11 est mis sous tension, le processeur 1101 est capable de lire de la RAM 1102 des instructions et de les exécuter. Dans un mode de réalisation, ces instructions forment un programme d'ordinateur causant la mise en œuvre complète ou partielle, par le processeur 1101, des procédés décrits ci-après en relation avec les Figs. 7 et 8.

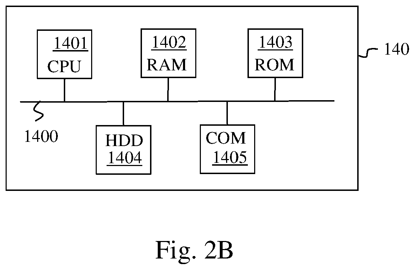

La **Fig. 2B** illustre schématiquement un exemple d'architecture matérielle d'un module de traitement 140 compris dans chaque terminal du groupe de terminaux.

Selon l'exemple d'architecture matérielle représenté à la Fig. 2B, le module de traitement 140 comprend alors, reliés par un bus de communication 1400 : un processeur ou CPU (« Central Processing Unit » en terminologie anglo-saxonne) 1401 ; une mémoire vive RAM (« Random Access Memory » en terminologie anglo-saxonne) 1402 ; une mémoire morte ROM (« Read Only Memory » en terminologie anglo-saxonne) 1403 ; une unité de stockage telle qu'un disque dur ou un lecteur de support de stockage, tel qu'un lecteur de cartes SD (« Secure Digital » en terminologie anglo-saxonne) 1404 ; au moins une interface de communication 1405 permettant au module de traitement 140 de communiquer avec d'autres dispositifs tels que la passerelle 12.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le terminal est mis sous tension, le processeur 1401 est capable de lire de la RAM 1402 des instructions et de les exécuter. Dans un mode de réalisation, ces instructions forment un programme d'ordinateur causant la mise en œuvre complète ou partielle, par le processeur 1401, des procédés décrits ci-après en relation avec les Figs. 7 et 8.

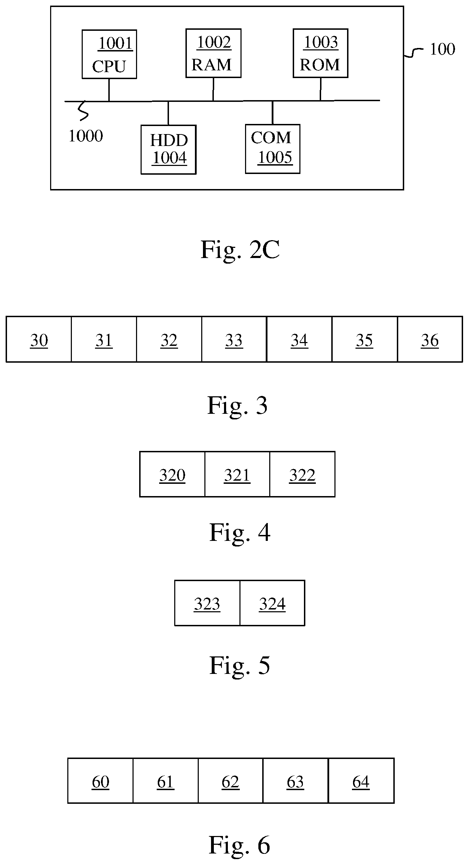

La **Fig. 2C** illustre schématiquement un exemple d'architecture matérielle d'un module de traitement 100 compris dans le serveur applicatif 10.

Selon l'exemple d'architecture matérielle représenté à la Fig. 2C, le module de traitement 100 comprend alors, reliés par un bus de communication 1000 : un processeur ou CPU (« Central Processing Unit » en terminologie anglo-saxonne) 1001 ; une mémoire vive RAM (« Random Access Memory » en terminologie anglo-saxonne) 1002 ; une mémoire morte ROM (« Read Only Memory » en terminologie anglo-saxonne) 1003 ; une unité de stockage telle qu'un disque dur ou un lecteur de support de stockage, tel qu'un lecteur de cartes SD (« Secure Digital » en terminologie anglo-saxonne) 1004 ; au moins une interface de communication 1005 permettant au module de traitement 100 de communiquer avec d'autres dispositifs tels que le serveur LNS 11.

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le terminal est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, des procédés décrits ci-après en relation avec les Figs. 7 et 8.

Les procédés décrits en relation avec les Figs. 7 et 8 peuvent être implémentés sous forme logicielle par exécution d'un ensemble d'instructions par une machine programmable, par exemple un DSP (« Digital Signal Processor » en terminologie anglo-saxonne) ou un microcontrôleur, ou être implémentés sous forme matérielle par une machine ou un composant dédié, par exemple un FPGA (« Field-Programmable Gate Array » en terminologie anglo-saxonne) ou un ASIC (« Application-Specific Integrated Circuit » en terminologie anglo-saxonne).

La **Fig. 7** illustre schématiquement une phase de connexion à un réseau LoRa selon l'invention.

Dans la Fig. 7, nous représentons une phase de connexion exécutée par le terminal 14A. Toutefois, chaque terminal 14B, 14C, 14D, 14E, 14F, 14G et 14H exécute la même phase de connexion lors de sa connexion au réseau LoRa. Cette phase est par exemple lancée par un opérateur lors d'une installation d'un terminal.

Dans une étape 701, le module de traitement 140 du terminal 14A provoque un envoi d'une trame LoRa montante en mode multidiffusion correspondant à une demande de connexion au réseau LoRa. La trame LoRa montante comprend un message JOIN REQUEST tel que défini dans le protocole LoRaWAN.

Dans une étape 702, la passerelle 12 reçoit la trame LoRa montante comprenant le message JOIN REQUEST et relaie le message JOIN REQUEST dans une trame HTTP montante destinée au serveur LNS 11.

Dans une étape 703, le serveur LNS 11 reçoit la trame HTTP montante contenant le message JOIN REQUEST.

Dans une étape 704, le module de traitement 110 du serveur LNS 11 provoque un envoi d'une réponse en point à point au message JOIN REQUEST à destination du terminal 14A. La réponse prend la forme d'un message d'autorisation de connexion adapté à l'invention, que nous appelons par la suite, JOIN ACCEPT BIS. Le message JOIN ACCEPT BIS est très similaire au message JOIN ACCEPT tel que défini dans le protocole LoRaWAN.

La **Fig. 3** illustre schématiquement un message d'autorisation de connexion selon l'invention.

Le message JOIN ACCEPT BIS comprend des champs 30, 31, 33 et 34 définis dans le protocole LoRaWAN. Le champ 30 codé sur trois octets correspond au champ *JoinNonce,* le champ 31 codé sur 3 octets correspond au champ *Home_NetID*, le champ 33 codé sur un octet correspond au champ *DLSettings,* et le champ 34 codé sur un octet correspond au champ *RxDelay.* Le message JOIN ACCEPT BIS comprend de plus un champ, dit *d'adresse de terminal,* 32 codé sur quatre octets correspondant à une version modifiée du champ *DevAddr.*

La **Fig. 4** illustre schématiquement un champ d'adresse de terminal du message d'autorisation de connexion.

Le champ d'adresse de terminal 32 est composé de trois sous-champs. Un premier sous-champ 320 correspond au champ *NWK* défini par le protocole LoRaWAN. Un deuxième sous-champ 321 comprend une adresse, dite *adresse haute,* codée sur « 17 » bits représentant une adresse allouée au groupe de terminaux formé des terminaux 14A, 14B, 14C, 14D, 14E, 14F, 14G et 14H. Dans un mode de réalisation, l'adresse haute a été fournie au serveur LNS 11 par le serveur d'applications 10. Un troisième sous-champ 322 comprend une adresse, dite *adresse basse,* codée sur huit bits. L'adresse basse représente un identifiant du terminal 14A dans le groupe de terminaux. On note que le nombre de bits dans l'adresse basse permet de donner un identifiant différent à chaque terminal du groupe de terminaux lorsque le groupe de terminaux comprend « 256 » terminaux. Lorsque dans un mode de réalisation, le groupe de terminaux comprend « 512 » ou « 1024 » terminaux, le nombre de bits de l'adresse basse passe respectivement à « 9 » et « 10 » bits. Dans ce cas, le nombre de bits de l'adresse haute est réduit d'autant et passe respectivement à « 16 » et « 15 » bits. Dans un mode de réalisation, l'adresse basse correspondant à chaque terminal a été fournie au serveur LNS 11 par le serveur d'applications 10.

De retour à la Fig. 3, le message JOIN ACCEPT BIS comprend de plus, un champ 35 transportant une information permettant une mise à l'heure du terminal 14A codée sur « 32 » bits et un champ 36 codé sur « 32 » bits comprenant une information fixant une date de prochain réveil du terminal 14A. La date de prochain réveil est ici codée en absolue. Dans un mode de réalisation, la date de prochain réveil pourrait être codée en relatif par rapport à l'information permettant une mise à l'heure contenue dans le champ 35. Dans ce cas, la date de prochain réveil pourrait être codée sur « 24 » bits.

De retour à la Fig. 7, le module de traitement 110 du serveur LNS 11 insère le message JOIN ACCEPT BIS dans une trame HTTP descendante lors de l'étape 704 et provoque l'envoi de cette trame HTTP descendante en point à point vers la passerelle 12.

Dans une étape 705, la passerelle 12 reçoit la trame HTTP descendante comprenant le message JOIN ACCEPT BIS. Lors de l'étape 705, la passerelle 12 insère le message JOINT ACCEPT BIS dans une trame LoRa descendante et transmet cette trame LoRa descendante en point à point à destination du terminal 14A.

Dans une étape 706, le terminal 14A reçoit la trame LoRa descendante comprenant le message JOIN ACCEPT BIS. Le module de traitement 140 du terminal 14A sauvegarde l'adresse haute contenue dans le champ 321 et son identifiant dans le groupe de terminaux contenu dans le champ 322. Par ailleurs, le module de traitement 140 met une horloge interne contenue dans le terminal 14A à l'heure avec l'information contenue dans le champ 35, enregistre la date de prochain réveil contenue dans le champ 36 et se met en veille jusqu'à ladite date de prochain réveil. On note que lors de chaque période de réveil, chaque terminal passe temporairement en classe C puis revient ensuite en classe A.

A la fin de la phase de connexion, le terminal 14A connaît donc l'adresse d'un groupe auquel il appartient et son identifiant dans le groupe.

La **Fig. 8** illustre schématiquement un fonctionnement d'une procédure d'acquittement selon l'invention.

Dans la Fig. 8, seuls sont représentés les terminaux 14A, 14B et 14C. On note que les autres terminaux du groupe de terminaux se comportent de la même manière que les terminaux 14A, 14B et 14C.

Dans une étape 801, le module de traitement 140 du terminal 14A provoque un envoi d'un message, dit *message applicatif,* à destination du serveur d'applications 10. Lors de l'étape 801, le message est inséré dans une trame LoRa montante qui est envoyée en point à point à la passerelle 12.

Dans une étape 802, la passerelle 12 reçoit la trame LoRa montante contenant le message applicatif. Lors de l'étape 802, la passerelle 12 insère le message applicatif dans une trame HTTP montante et envoie la trame HTTP montante en point à point vers le serveur LNS 11.

Dans une étape 803, le serveur LNS 11 reçoit la trame HTTP montante contenant le message applicatif et relaie cette trame en direction du serveur d'applications 10.

En parallèle, le terminal 14B (respectivement 14C) exécute une étape 805 (respectivement 809) identique à l'étape 801 afin d'envoyer un message applicatif. Suite à l'envoi de ce message applicatif, la passerelle 12, le serveur LNS 11 et le serveur d'applications 10 exécutent respectivement des étapes 806, 807, 808 (respectivement 810, 811, 812) identiques aux étapes 802, 803, 804. Suite aux étapes 804, 808 et 812, le serveur d'applications 10 a reçu trois messages applicatifs.

Dans une étape 813, le module de traitement 100 du serveur applicatif 10 génère un message d'acquittement destiné à acquitter chaque message applicatif transmis par un terminal du groupe de terminaux depuis un dernier acquittement. Lors de l'étape 813, le message d'acquittement est inséré dans une trame HTTP descendante envoyée en mode multidiffusion (« broadcast » en terminologie anglo-saxonne). Nous appelons par la suite la trame HTTP descendante transportant un message d'acquittement, *trame HTTP d'acquittement.*

La **Fig. 6** illustre schématiquement un message d'acquittement.

Le message d'acquittement comprend une pluralité de champs. Un premier champ 60, codé sur « 32 » bits, comprend une information permettant une mise à l'heure de chaque terminal recevant le message d'acquittement. Un deuxième champ 61, codé sur « 32 » bits, fixe une date de prochain réveil de chaque terminal recevant le message d'acquittement. Un troisième champ 62 comprend « 5 » bits réservés. Un quatrième champ 63 comprend une information représentative d'un identifiant du groupe de terminaux auquel s'adresse le serveur d'applications 10. Ici, le groupe de terminaux est formé des terminaux 14A, 14B, 14C, 14D, 14E, 14F, 14G et 14H. Cet identifiant est l'adresse haute comprise dans le champ 321 qui a été fournie lors de la phase de connexion. Un cinquième champ 64, codé sur « 256 » bits lorsque le groupe de terminaux concerné comprend 256 terminaux, comprend une information indiquant pour chaque terminal dudit groupe si la trame qu'il a envoyée à destination du serveur d'applications depuis un précédent acquittement est acquittée. Ici, les trames envoyées depuis le précédent acquittement comprennent les trames LoRa montantes comprenant un message applicatif envoyé lors des étapes 801, 802 et 803.

Dans un mode de réalisation, le champ 64 prend la forme d'un masque binaire dans lequel chaque bit correspond à un terminal du groupe de terminaux. L'adresse basse reçue lors de la phase de connexion par chaque terminal du groupe de terminaux correspond à la position du bit correspondant audit terminal dans le masque binaire.

De retour à la Fig. 8, lors de l'étape 813, le module de traitement 100 du serveur d'applications 10 transmet la trame HTTP d'acquittement en direction du serveur LNS 11.

Dans une étape 814, le serveur LNS 11 reçoit la trame HTTP d'acquittement. Dans un mode de réalisation, le serveur LNS 11 forme un message MAC tel que décrit dans la section 4 du protocole LoRaWAN (LoRaWAN 1.1 Specification, final release, 11 octobre 2017*)* dans lequel le message d'acquittement est inséré dans une sous-partie de type *FRMPayload* d'une partie utile de type *MACPayload.* Par ailleurs, afin de former une trame destinée à être transmise en mode multidiffusion (« broadcast » en terminologie anglo-saxonne), le champ *DevAddr* de l'entête de trame (« *Frame header* » en terminologie anglo-saxonne) décrit dans la section 4.3.1 du protocole LoRaWAN prend une forme décrite en relation avec la Fig. 5.

La **Fig. 5** illustre schématiquement un champ d'adresse de terminal *DevAddr* d'une trame d'acquittement.

Le champ *DevAddr* d'une trame d'acquittement est divisé en deux sous-champs. Un premier sous-champ 323 correspond au champ *NWK* défini par le protocole LoRaWAN. Un deuxième sous-champ 324 comprend une adresse prédéfinie représentative d'une transmission en mode multidiffusion, codée sur « 27 » bits. Ainsi, un terminal recevant une trame comprenant une telle adresse prédéfinie reconnaît que cette trame a été transmise en mode multidiffusion. Dans un mode de réalisation, tous les bits de l'adresse prédéfinie représentative d'une transmission en mode multidiffusion sont à « 1 ».

Une fois formée, le module de traitement 110 du serveur LNS 11 insère le message MAC dans une trame HTTP descendante et transmet cette trame HTTP descendante en direction de la passerelle 12.

Dans une étape 815, la passerelle 12 reçoit la trame HTTP contenant le message MAC contenant le message d'acquittement. Lors de l'étape 815, le message MAC est inséré dans une trame LoRa descendante. La trame LoRa descendante comprenant le message MAC comprenant le message d'acquittement est transmise en mode multidiffusion vers les terminaux du groupe de terminaux.

Dans une étape 818 (respectivement 817 et 816), le terminal 14A (respectivement 14B et 14C) reçoit la trame LoRa descendante comprenant le message MAC comprenant le message d'acquittement.

Suite à la réception de la trame d'acquittement, le terminal 14A (respectivement 14B et 14C) met à l'heure une horloge interne audit terminal en utilisant le champ 60 du message d'acquittement et sauvegarde la date de prochain réveil contenue dans le champ 61. Si l'identifiant compris dans le champ 63 correspond à l'adresse haute du groupe de terminaux reçue par le terminal 14A (respectivement 14B et 14C) lors de la phase de connexion, le module de traitement 140 dudit terminal 14A (respectivement 14B et 14C) considère que la trame LoRa descendante comprenant le message MAC comprenant le message d'acquittement le concerne. Dans ce cas, il vérifie, en utilisant le champ 64, si la trame qu'il a émise depuis l'acquittement précédent est acquittée. Pour ce faire, il recherche dans le masque binaire le bit correspondant à l'adresse basse représentée par le champ 322 qu'il a reçu lors de la phase de connexion. Si ce bit est à « 1 », la trame est considérée comme acquittée. Sinon, la trame est considérée comme perdue. En cas de trame perdue, le module de traitement 140 du terminal 14A (respectivement 14B et 14C) provoque le renvoi de la trame perdue.

Le module de traitement 140 du terminal 14A (respectivement 14B et 14C) provoque ensuite la mise en veille dudit terminal jusqu'à la prochaine date de réveil. Là encore, chaque terminal passe temporairement en classe C lorsqu'il est éveillé et repasse en classe A ensuite.

Si le module de traitement 140 du terminal 14A (respectivement 14B et 14C) considère que la trame LoRa descendante comprenant le message MAC comprenant le message d'acquittement ne le concerne pas, il ignore le champ 64 et provoque directement la mise en veille dudit terminal jusqu'à la prochaine date de réveil.

Dans un mode de réalisation, chaque terminal a transmis plus d'une trame depuis le précédent acquittement. Dans ce cas, la trame d'acquittement permet d'acquitter chaque trame transmise depuis le précédent acquittement.

Dans un mode de réalisation, le serveur d'applications 10 transmet plusieurs messages d'acquittements successifs au serveur LNS 11, chaque message d'acquittement concernant des terminaux du groupe de terminaux différents. Le serveur LNS 10 reçoit alors une pluralité de messages d'acquittement et forme un message d'acquittement, dit message d'acquittement concaténé, à partir de la pluralité de messages d'acquittement qu'il a reçus. Chaque bit du masque binaire du message d'acquittement concaténé prend la valeur « 1 » lorsqu'un bit situé à la même position dans un des masques binaires d'un message d'acquittement de la pluralité de messages d'acquittement est à la valeur « 1 ». Les champs 60, 61, 62 et 63 étant identiques dans chaque message d'acquittement, les champs 60, 61, 62 et 63 d'un des messages d'acquittement de la pluralité de messages d'acquittement sont recopiés dans le message d'acquittement concaténé. Ainsi la trame transmise en mode multidiffusion lors de l'étape 814 comprend pour chaque champ (*i.e.* pour les champs 60, 61, 62, 63, 64) de chaque message d'acquittement, une information représentative (*i.e.* des champs 60, 61, 62, 63, et 64) comprenant une information représentative de l'information représentée par le dit champ.

Dans un mode de réalisation, le serveur d'applications forme directement le message MAC comprenant le message d'acquittement. Ainsi, la trame HTTP descendante transmise lors de l'étape 813 comprenant le message MAC comprenant le message d'acquittement, est relayée sans être modifiée par le serveur LNS 11.

Dans un mode de réalisation, le champ 62 du message d'acquittement représente un identifiant d'une fonction permettant de crypter l'adresse haute d'un groupe de terminaux. Le champ 62 comprenant « 5 » bits, il permet de donner un identifiant à « 32 » fonctions différentes. Une méthode de cryptage est par exemple une rotation circulaire droite des bits de l'adresse haute d'un nombre de bits obtenu en convertissant le champ 62, *i.e.* en convertissant le nombre binaire représenté par le champ 62, en une valeur décimale. Ainsi, dans ce mode de réalisation, l'identifiant représenté par le champ 63 dans le message d'acquittement n'est pas directement l'adresse haute mais une version cryptée de cette adresse haute. Par ailleurs, chaque terminal connaît la fonction de cryptage correspondant à chaque valeur possible du champ 62. Chaque terminal peut ainsi décrypter l'identifiant représenté par le champ 63 pour comparer la valeur obtenue à l'adresse haute qu'il a obtenue lors de la phase de connexion.

Dans un mode de réalisation, lorsque le serveur d'applications 10 implémente plusieurs applications ou lorsqu'un terminal contribue à plusieurs applications, le champ 62 est divisé en deux parties, une partie des bits du champ 62 (par exemple « 3 ») étant destinée à identifier une fonction de cryptage et une autre partie des bits (par exemple « 2 ») étant destinée à identifier une application. Préférentiellement, le champ *FPort* défini dans le champ *MACPayload* lui-même défini dans le protocole LoRaWAN permet d'identifier l'application qui acquitte.

## Revendications

1. Procédé d'acquittement de trames émises par des terminaux d'un groupe de terminaux à destination d'un serveur d'applications, chaque terminal dudit groupe communiquant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le procédé est exécuté par le serveur centralisateur et comprend :
fournir, par le serveur centralisateur à chaque terminal dudit groupe, lors d'une phase de connexion au troisième réseau exécutée par ledit terminal, un identifiant de groupe,
recevoir au moins un message d'acquittement émis par le serveur d'applications, chaque message d'acquittement acquittant une pluralité de trames émises par des terminaux dudit groupe, chaque message d'acquittement comprenant une pluralité de champs :
- un premier champ comprenant une information permettant une mise à l'heure de chaque terminal recevant le message d'acquittement,
- un deuxième champ comprenant une information fixant une date de prochain réveil de chaque terminal recevant le message d'acquittement,
- un troisième champ comprenant une information représentative d'un identifiant dudit groupe, et
- un quatrième champ comprenant une information indiquant pour chaque terminal dudit groupe si chaque trame qu'il a envoyée à destination du serveur d'applications depuis un précédent acquittement est acquittée ;
et **en ce que** le procédé comprend en outre :
transmettre une trame en mode multidiffusion à destination dudit groupe via chaque passerelle permettant de communiquer avec un terminal dudit groupe, ladite trame comprenant pour chaque champ de chaque message d'acquittement reçu, une information représentative de l'information représentée par le dit champ.

2. Procédé selon la revendication 1, **caractérisé en ce que**, lorsque le serveur centralisateur reçoit un seul message d'acquittement, la trame transmise en mode multidiffusion comprend le message d'acquittement.

3. Procédé selon la revendication 1 ou 2, **caractérisé en ce que**, chaque trame destinée à être transmise en mode multidiffusion audit groupe, comprend dans un champ d'adresse de terminal de ladite trame, une adresse prédéfinie, chaque terminal recevant une trame comprenant l'adresse prédéfinie identifiant cette trame comme une trame émise en mode multidiffusion.

4. Procédé selon la revendication 1, 2 ou 3, **caractérisé en ce que**, lors de la phase de connexion, le serveur centralisateur répond à chaque trame de demande de connexion émanant d'un terminal dudit groupe par une trame d'autorisation de connexion transmise en point à point au terminal ayant transmis la trame de demande de connexion, la trame d'autorisation de connexion comprenant l'identifiant dudit groupe dans un champ d'adresse de terminal, un champ comprenant une information permettant une mise à l'heure du terminal destinataire de ladite trame d'autorisation et un champ fixant une date de prochain réveil dudit terminal destinataire.

5. Procédé selon la revendication 4, **caractérisé en ce que** le quatrième champ prend la forme d'un masque binaire dans lequel chaque bit correspond à un terminal dudit groupe, le champ d'adresse de terminal de ladite trame d'autorisation de connexion comprenant en outre une information indiquant au terminal destinataire de ladite trame d'autorisation de connexion une position dans le masque binaire du bit correspondant audit terminal destinataire.

6. Procédé selon l'une quelconque des revendications précédentes, **caractérisé en ce que**, lorsque le serveur d'applications implémente une pluralité d'applications, chaque terminal dudit groupe pouvant contribuer à chaque application de la pluralité d'applications, chaque application implémentée par le serveur d'applications étant associée à un numéro d'application connu par chaque terminal dudit groupe, chaque message d'acquittement comprend un cinquième champ comprenant un identifiant d'application permettant d'identifier l'application parmi la pluralité d'applications pour laquelle des trames sont acquittées.

7. Procédé d'acquittement de trames émises par des terminaux d'un groupe de terminaux à destination d'un serveur d'applications, chaque terminal dudit groupe communiquant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le procédé est exécuté par un terminal, dit terminal courant, dudit groupe et comprend :
recevoir, depuis le serveur centralisateur, lors d'une phase de connexion au troisième réseau exécutée par ledit terminal, un identifiant de groupe,
recevoir une trame d'acquittement, la trame d'acquittement ayant été transmise en mode multidiffusion par le serveur centralisateur et comprenant un message d'acquittement généré à partir d'informations fournies par le serveur d'applications, ledit message étant identique pour chaque terminal dudit groupe et composé d'une pluralité de champs :
- un premier champ comprenant une information permettant une mise à l'heure du terminal courant,
- un deuxième champ fixant une date de prochain réveil du terminal courant,
- un troisième champ comprenant une information représentative d'un identifiant dudit groupe, et,
- un quatrième champ comprenant une information indiquant audit terminal courant si chaque trame qu'il a envoyé à destination du serveur d'applications est acquittée ;
mettre à l'heure une horloge interne audit terminal en utilisant le premier champ ;
si l'identifiant représenté par l'information représentative de l'identifiant dudit groupe contenu dans le troisième champ correspond à l'identifiant reçu par le terminal courant lors de la phase de connexion, vérifier, en utilisant le quatrième champ, que chaque trame émise depuis un précédent acquittement est acquittée ; et,
se mettre en veille jusqu'à la date de prochain réveil indiquée dans le deuxième champ.

8. Procédé d'acquittement de trames émises par des terminaux d'un groupe de terminaux à destination d'un serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le procédé exécuté par le serveur d'applications comprend :
générer un message d'acquittement, le message d'acquittement comprenant une pluralité de champs :
- un premier champ comprenant une information permettant une mise à l'heure de chaque terminal recevant ledit message,
- un deuxième champ comprenant une information fixant une date de prochain réveil de chaque terminal recevant ledit message,
- un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et,
- un quatrième champ comprenant une information indiquant pour chaque terminal dudit groupe si chaque trame qu'il a envoyé à destination du serveur d'applications depuis un précédent acquittement est acquittée ; et,
émettre une trame comprenant ledit message, les informations comprises dans chaque champ dudit message étant destinées à être transmises à chaque terminal du groupe de terminaux via le serveur centralisateur et chaque passerelle permettant au serveur centralisateur de communiquer avec chaque terminal du groupe de terminaux.

9. Procédé selon l'une quelconque des revendications précédentes, **caractérisé en**
**ce que** le protocole de communication adapté
audit réseau LoRa est le protocole LoRaWAN.

10. Dispositif de type serveur centralisateur, permettant d'acquitter des trames émises par des terminaux d'un groupe de terminaux à destination d'un serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le dispositif comprend :
des moyens de réception pour recevoir un message d'acquittement émis par le serveur d'applications, ledit message acquittant une pluralité de trames émises par des terminaux dudit groupe, le message d'acquittement comprenant une pluralité de champs :
- un premier champ comprenant une information permettant une mise à l'heure de chaque terminal recevant ledit message,
- un deuxième champ comprenant une information fixant une date de prochain réveil de chaque terminal recevant la partie utile,
- un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, ,
- un quatrième champ comprenant une information indiquant pour chaque terminal dudit groupe si chaque trame qu'il a envoyé à destination du serveur d'applications depuis un précédent acquittement est acquittée ; et,
des moyens de transmission pour transmettre une trame en mode multidiffusion à destination dudit groupe via chaque passerelle permettant de communiquer avec un terminal dudit groupe, ladite trame comprenant, pour chaque champ de chaque message d'acquittement reçu, une information représentative de l'information représentée par le dit champ.

11. Dispositif de type terminal appartenant à un groupe de terminaux émettant des trames à destination d'un serveur d'applications, chaque terminal dudit groupe communiquant avec le serveur d'applications via une passerelle et un serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le terminal, dit terminal courant, comprend :
des moyens pour recevoir, depuis le serveur centralisateur, un identifiant fourni audit terminal lors d'une phase de connexion au troisième réseau exécutée par ledit terminal,
des moyens de réception pour recevoir une trame d'acquittement, la trame d'acquittement ayant été transmise en mode multidiffusion par le serveur centralisateur et comprenant un message d'acquittement généré à partir d'informations fournies par le serveur d'applications, ledit message étant identique pour chaque terminal dudit groupe et composé d'une pluralité de champs :
- un premier champ comprenant une information permettant une mise à l'heure du terminal courant,
- un deuxième champ fixant une date de prochain réveil du terminal courant,
- un troisième champ comprenant une information représentative d'un identifiant dudit groupe, ledit identifiant ayant été fourni par le serveur centralisateur au terminal courant lors d'une phase de connexion au troisième réseau exécuté par le terminal courant, et,
- un quatrième champ comprenant une information indiquant audit terminal courant si chaque trame qu'il a envoyée à destination du serveur d'applications est acquittée ;
des moyens pour mettre à l'heure une horloge interne audit terminal courant en utilisant le premier champ ;
des moyens pour vérifier, en utilisant le quatrième champ et si l'identifiant représenté par l'information représentative de l'identifiant dudit groupe contenu dans le troisième champ correspond à l'identifiant reçu par le terminal courant lors de la phase de connexion, que chaque trame émise est acquittée ; et,
des moyens de mise en veille pour mettre en veille le terminal courant jusqu'à la date de prochain réveil indiquée dans le deuxième champ.

12. Dispositif de type serveur d'applications adapté pour acquitter des trames émises par des terminaux d'un groupe de terminaux à destination dudit serveur d'applications, chaque terminal dudit groupe communiquant avec le serveur d'applications via une passerelle et le serveur centralisateur, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau, **caractérisé en ce que** le dispositif comprend :
des moyens pour générer un message d'acquittement, le message d'acquittement comprenant une pluralité de champs, un premier champ comprenant une information permettant une mise à l'heure de chaque terminal recevant ledit message, un deuxième champ fixant une date de prochain réveil de chaque terminal recevant ledit message, un troisième champ comprenant une information représentative d'un identifiant dudit groupe, ledit identifiant ayant été fourni par le serveur centralisateur à chaque terminal dudit groupe lors d'une phase de connexion au troisième réseau exécutée par ledit terminal, et un quatrième champ comprenant une information indiquant pour chaque terminal dudit groupe si chaque trame qu'il a envoyé à destination du serveur d'applications depuis un précédent acquittement est acquittée ;
ledit message étant destiné à être transmis à chaque terminal du groupe de terminaux via le serveur centralisateur et chaque passerelle permettant au serveur centralisateur de communiquer avec chaque terminal du groupe de terminaux.

13. Système comprenant un groupe de terminaux selon la revendication 11, émettant des trames à destination d'un serveur d'applications selon la revendication 12, chaque terminal dudit groupe communiquant avec le serveur d'applications via une passerelle et un serveur centralisateur selon la revendication 10, le serveur d'applications étant relié au serveur centralisateur via un premier réseau de communication, le serveur centralisateur étant relié à chaque passerelle par un deuxième réseau de communication, le groupe de terminaux et chaque passerelle formant un troisième réseau de type réseau sans fil de type LoRa, à grande portée et permettant une faible consommation d'énergie, chaque communication entre un terminal dudit groupe et une passerelle utilisant un protocole de communication adapté audit troisième réseau.

14. Programme d'ordinateur, **caractérisé en ce qu'**il comprend des instructions pour mettre en œuvre, par un dispositif, le procédé selon l'une quelconque des revendications 1 à 9, lorsque ledit programme est exécuté par un processeur dudit dispositif.

15. Moyens de stockage, **caractérisés en ce qu'**ils stockent un programme d'ordinateur comprenant des instructions pour mettre en œuvre, par un dispositif, le procédé selon l'une quelconque des revendications 1 à 9, lorsque ledit programme est exécuté par un processeur dudit dispositif.

## Patentansprüche

1. Verfahren zur Bestätigung von Frames, die von Endgeräten einer Gruppe von Endgeräten an einen Anwendungsserver gesendet werden, wobei jedes Endgerät der Gruppe über ein Gateway und einen zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein an das dritte Netzwerk angepasstes Kommunikationsprotokoll verwendet, **dadurch gekennzeichnet, dass** das Verfahren vom zentralisierenden Server ausgeführt wird und enthält:
Liefern einer Gruppenkennung an jedes Endgerät der Gruppe durch den zentralisierenden Server bei einer vom Endgerät ausgeführten Verbindungsphase mit dem dritten Netzwerk,
Empfang mindestens einer vom Anwendungsserver gesendeten Bestätigungsnachricht, wobei jede Bestätigungsnachricht eine Vielzahl von Frames bestätigt, die von den Endgeräten der Gruppe gesendet werden, wobei jede Bestätigungsnachricht eine Vielzahl von Feldern enthält:
- ein erstes Feld, das eine Information enthält, die eine Zeiteinstellung jedes die Bestätigungsnachricht empfangenden Endgeräts ermöglicht,
- ein zweites Feld, das eine Information enthält, die ein Datum eines nächsten Aufwachens jedes die Bestätigungsnachricht empfangenden Endgeräts festlegt,
- ein drittes Feld, das eine für eine Kennung der Gruppe repräsentative Information enthält, und
- ein viertes Feld, das eine Information enthält, die für jedes Endgerät der Gruppe angibt, ob jeder Frame, den es seit einer vorhergehenden Bestätigung an den Anwendungsserver gesendet hat, bestätigt ist;
und dass das Verfahren außerdem enthält:
Übertragen eines Frames im Multicast-Modus an die Gruppe über jedes Gateway, das es ermöglicht, mit einem Endgerät der Gruppe zu kommunizieren, wobei der Frame für jedes Feld jeder empfangenen Bestätigungsnachricht eine für die vom Feld dargestellte Information repräsentative Information enthält.

2. Verfahren nach Anspruch 1, **dadurch gekennzeichnet, dass**, wenn der zentralisierende Server eine einzige Bestätigungsnachricht empfängt, der im Multicast-Modus übertragene Frame die Bestätigungsnachricht enthält.

3. Verfahren nach Anspruch 1 oder 2, **dadurch gekennzeichnet, dass** jeder Frame, der dazu bestimmt ist, im Multicast-Modus an die Gruppe übertragen zu werden, in einem Endgerät-Adressfeld des Frames eine vordefinierte Adresse enthält, wobei jedes Endgerät, das einen die vordefinierte Adresse enthaltenden Frame empfängt, diesen Frame als einen im Multicast-Modus gesendeten Frame identifiziert.

4. Verfahren nach Anspruch 1, 2 oder 3, **dadurch gekennzeichnet, dass** der zentralisierende Server in der Verbindungsphase auf jeden Frame einer Verbindungsanfrage, die von einem Endgerät der Gruppe stammt, durch einen Verbindungsgenehmigungsframe antwortet, der im Punkt-zu-Punkt-Modus an das Endgerät übertragen wird, das den Verbindungsanfrageframe übertragen hat, wobei der Verbindungsgenehmigungsframe die Kennung der Gruppe in einem Endgerät-Adressfeld enthält, wobei ein Feld eine Information enthält, die eine Zeiteinstellung des Zielendgeräts des Genehmigungsframes enthält, und ein Feld ein Datum eines nächsten Aufwachens des Zielendgeräts festlegt.

5. Verfahren nach Anspruch 4, **dadurch gekennzeichnet, dass** das vierte Feld die Form einer Binärmaske annimmt, wobei jedes Bit einem Endgerät der Gruppe entspricht, wobei das Endgerät-Adressfeld des Verbindungsgenehmigungsframes außerdem eine Information enthält, die dem Zielendgerät des Verbindungsgenehmigungsframes eine Position des dem Zielendgerät entsprechenden Bits in der Binärmaske angibt.

6. Verfahren nach einem der vorhergehenden Ansprüche, **dadurch gekennzeichnet, dass**, wenn der Anwendungsserver eine Vielzahl von Anwendungen implementiert, wobei jedes Endgerät der Gruppe zu jeder Anwendung der Vielzahl von Anwendungen beitragen kann, wobei jede vom Anwendungsserver implementierte Anwendung einer jedem Endgerät der Gruppe bekannten Anwendungsnummer zugeordnet ist, jede Bestätigungsnachricht ein fünftes Feld enthält, das eine Anwendungskennung enthält, die es ermöglicht, die Anwendung unter der Vielzahl von Anwendungen zu identifizieren, für die Frames bestätigt sind.

7. Verfahren zur Bestätigung von Frames, die von Endgeräten einer Gruppe von Endgeräten an einen Anwendungsserver gesendet werden, wobei jedes Endgerät der Gruppe über ein Gateway und einen zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein Kommunikationsprotokoll verwendet, das an das dritte Netzwerk angepasst ist, **dadurch gekennzeichnet, dass** das Verfahren von einem Endgerät, aktuelles Endgerät genannt, der Gruppe ausgeführt wird und enthält:
Empfang einer Gruppenkennung vom zentralisierenden Server bei einer vom Endgerät ausgeführten Verbindungsphase mit dem dritten Netzwerk,
Empfang eines Bestätigungsframes, wobei der Bestätigungsframe im Multicast-Modus vom zentralisierenden Server übertragen wurde und eine Bestätigungsnachricht enthält, die ausgehend von vom Anwendungsserver gelieferten Informationen generiert wurde, wobei die Nachricht für jedes Endgerät der Gruppe gleich und aus einer Vielzahl von Feldern zusammengesetzt ist:
- einem ersten Feld, das eine Information enthält, die eine Zeiteinstellung des aktuellen Endgeräts ermöglicht,
- einem zweiten Feld, das ein Datum eines nächsten Aufwachens des aktuellen Endgeräts festlegt,
- einem dritten Feld, das eine für eine Kennung der Gruppe repräsentative Information enthält, und
- einem vierten Feld, das eine Information enthält, die dem aktuellen Endgerät angibt, ob jeder Frame, den es an den Anwendungsserver geschickt hat, bestätigt ist;
Zeiteinstellung eines inneren Taktgebers des Endgeräts unter Verwendung des ersten Felds;
wenn die Kennung, die von der für die im dritten Feld enthaltene Kennung der Gruppe repräsentativen Information dargestellt wird, der vom aktuellen Endgerät in der Verbindungsphase empfangenen Kennung entspricht, Überprüfen, unter Verwendung des vierten Felds, dass jeder seit einer vorhergehenden Bestätigung gesendete Frame bestätigt ist; und
sich Versetzen in den Standby-Zustand bis zum im zweiten Feld angegebenen Datum des nächsten Aufwachens.

8. Verfahren zur Bestätigung von Frames, die von Endgeräten einer Gruppe von Endgeräten an einen Anwendungsserver gesendet werden, wobei jedes Endgerät der Gruppe über ein Gateway und den zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bildet, wobei jede Kommunikation zwischen einem Endgerät der Gruppe und einem Gateway ein an das dritte Netzwerk angepasstes Kommunikationsprotokoll verwendet, **dadurch gekennzeichnet, dass** das vom Anwendungsserver ausgeführte Verfahren enthält:
Generieren einer Bestätigungsnachricht, wobei die Bestätigungsnachricht eine Vielzahl von Feldern enthält:
- ein erstes Feld, das eine Information enthält, die eine Zeiteinstellung jedes die Nachricht empfangenden Endgeräts ermöglicht,
- ein zweites Feld, das eine Information enthält, die ein Datum eines nächsten Aufwachens jedes die Nachricht empfangenden Endgeräts festlegt,
- ein drittes Feld, das eine für eine Kennung der Gruppe repräsentative Information enthält, wobei die Kennung vom zentralisierenden Server in einer vom Endgerät ausgeführten Verbindungsphase mit dem dritten Netzwerk an jedes Endgerät der Gruppe geliefert wurde,
- ein viertes Feld, das eine Information enthält, die für jedes Endgerät der Gruppe angibt, ob jeder Frame, den es seit einer vorhergehenden Bestätigung an den Anwendungsserver gesendet hat, bestätigt ist; und
Senden eines die Nachricht enthaltenden Frames, wobei die in jedem Feld der Nachricht enthaltenen Informationen dazu bestimmt sind, über den zentralisierenden Server an jedes Endgerät der Gruppe von Endgeräten übertragen zu werden, und jedes Gateway es dem zentralisierende Server ermöglicht, mit jedem Endgerät der Gruppe von Endgeräten zu kommunizieren.

9. Verfahren nach einem der vorhergehenden Ansprüche, **dadurch gekennzeichnet, dass** das an das Netzwerk LoRa angepasste Kommunikationsprotokoll das Protokoll LoRaWAN ist.

10. Vorrichtung vom Typ zentralisierender Server, die es ermöglicht, Frames zu bestätigen, die von Endgeräten einer Gruppe von Endgeräten an einen Anwendungsserver gesendet werden, wobei jedes Endgerät der Gruppe über ein Gateway und den zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein an das dritte Netzwerk angepasstes Kommunikationsprotokoll verwendet, **dadurch gekennzeichnet, dass** die Vorrichtung enthält:
Empfangseinrichtungen, um eine vom Anwendungsserver gesendete Bestätigungsnachricht zu empfangen, wobei die Nachricht eine Vielzahl von Frames bestätigt, die von Endgeräte der Gruppe gesendet werden, wobei die Bestätigungsnachricht eine Vielzahl von Feldern enthält:
- ein erstes Feld, das eine Information enthält, die eine Zeiteinstellung jedes die Nachricht empfangenden Endgeräts ermöglicht,
- ein zweites Feld, das eine Information enthält, die ein Datum eines nächsten Aufwachens jedes den Nutzteil empfangenden Endgeräts festlegt,
- ein drittes Feld, das eine für eine Kennung der Gruppe repräsentative Information enthält, wobei die Kennung vom zentralisierenden Server in einer vom Endgerät ausgeführten Verbindungsphase mit dem dritten Netzwerk an jedes Endgerät der Gruppe geliefert wurde,
- ein viertes Feld, das eine Information enthält, die für jedes Endgerät der Gruppe angibt, ob jeder Frame, den es seit einer vorhergehenden Bestätigung an den Anwendungsserver gesendet hat, bestätigt ist; und
Übertragungseinrichtungen, um einen Frame über jedes Gateway im Multicast-Modus an die Gruppe zu übertragen, das es ermöglicht, mit einem Endgerät der Gruppe zu kommunizieren, wobei der Frame für jedes Feld jeder empfangenen Bestätigungsnachricht eine Information enthält, die für die durch das Feld dargestellte Information repräsentativ ist.

11. Vorrichtung vom Typ Endgerät, die zu einer Gruppe von Endgeräten gehört, die Frames an einen Anwendungsserver senden, wobei jedes Endgerät der Gruppe über ein Gateway und einen zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein an das dritte Netzwerk angepasstes Kommunikationsprotokoll verwendet, **dadurch gekennzeichnet, dass** das Endgerät, aktuelles Endgerät genannt, enthält:
Einrichtungen, um vom zentralisierenden Server eine Kennung zu empfangen, die in einer vom Endgerät ausgeführten Verbindungsphase mit dem dritten Netzwerk an das Endgerät geliefert wird,
Empfangseinrichtungen, um einen Bestätigungsframe zu empfangen, wobei der Bestätigungsframe vom zentralisierenden Server im Multicast-Modus übertragen wurde und eine Bestätigungsnachricht enthält, die ausgehend von vom Anwendungsserver gelieferten Informationen generiert wurde, wobei die Nachricht für jedes Endgerät der Gruppe gleich und aus einer Vielzahl von Feldern zusammengesetzt ist:
- einem ersten Feld, das eine Information enthält, die eine Zeiteinstellung des aktuellen Endgeräts ermöglicht,
- einem zweiten Feld, das ein Datum eines nächsten Aufwachens des aktuellen Endgeräts festlegt,
- einem dritten Feld, das eine für eine Kennung der Gruppe repräsentative Information enthält, wobei die Kennung in einer vom aktuellen Endgerät ausgeführten Verbindungsphase mit dem dritten Netzwerk vom zentralisierenden Server an das aktuelle Endgerät geliefert wurde, und
- einem vierten Feld, das eine Information enthält, die dem aktuellen Endgerät angibt, ob jeder Frame, den es an den Anwendungsserver geschickt hat, bestätigt ist;
Einrichtungen, um einen internen Taktgeber des aktuellen Endgeräts unter Verwendung des ersten Felds zeitlich einzustellen;
Einrichtungen, um unter Verwendung des vierten Felds, und wenn die Kennung, die von der Information dargestellt wird, die für die im dritten Feld enthaltene Kennung der Gruppe repräsentativ ist, der vom aktuellen Endgerät in der Verbindungsphase empfangenen Kennung entspricht, zu überprüfen, dass jeder gesendete Frame bestätigt ist; und
Einrichtungen zum Versetzen in den Standby-Zustand, um das aktuelle Endgerät bis zum im zweiten Feld angegebenen Datum des nächsten Aufwachens in den Standby-Zustand zu versetzen.

12. Vorrichtung vom Typ Anwendungsserver, die geeignet ist, Frames zu bestätigen, die von Endgeräten einer Gruppe von Endgeräten an den Anwendungsserver gesendet werden, wobei jedes Endgerät der Gruppe über ein Gateway und den zentralisierenden Server mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein an das dritte Netzwerk angepasstes Kommunikationsprotokoll verwendet, **dadurch gekennzeichnet, dass** die Vorrichtung enthält:
Einrichtungen zum Generieren einer Bestätigungsnachricht, wobei die Bestätigungsnachricht eine Vielzahl von Feldern enthält, wobei ein erstes Feld eine Information enthält, die eine Zeiteinstellung jedes die Nachricht empfangenden Endgeräts ermöglicht, wobei ein zweites Feld ein Datum des nächsten Aufwachens jedes die Nachricht empfangenden Endgeräts festlegt, wobei ein drittes Feld eine für eine Kennung der Gruppe repräsentative Information enthält, wobei die Kennung vom zentralisierenden Server an jedes Endgerät der Gruppe in einer vom Endgerät ausgeführten Verbindungsphase mit dem dritten Netzwerk geliefert wurde, und wobei ein viertes Feld eine Information enthält, die für jedes Endgerät der Gruppe angibt, ob jeder Frame, den es seit einer vorhergehenden Bestätigung an den Anwendungsserver gesendet hat, bestätigt ist;
wobei die Nachricht dazu bestimmt ist, über den zentralisierenden Server an jedes Endgerät der Gruppe von Endgeräten übertragen zu werden, und jedes Gateway es dem zentralisierende Server ermöglicht, mit jedem Endgerät der Gruppe von Endgeräten zu kommunizieren.

13. System, das eine Gruppe von Endgeräten nach Anspruch 11 enthält, die Frames an einen Anwendungsserver nach Anspruch 12 senden, wobei jedes Endgerät der Gruppe über ein Gateway und einen zentralisierenden Server nach Anspruch 10 mit dem Anwendungsserver kommuniziert, wobei der Anwendungsserver über ein erstes Kommunikationsnetzwerk mit dem zentralisierenden Server verbunden ist, wobei der zentralisierende Server über ein zweites Kommunikationsnetzwerk mit jedem Gateway verbunden ist, wobei die Gruppe von Endgeräten und jedes Gateway ein drittes Netzwerk vom Typ drahtloses Netzwerk vom Typ LoRa mit großer Reichweite und einen geringen Energieverbrauch ermöglichend bilden, wobei jede Kommunikation zwischen einem Endgerät der Gruppe und einem Gateway ein an das dritte Netzwerk angepasstes Kommunikationsprotokoll verwendet.

14. Computerprogramm, **dadurch gekennzeichnet, dass** es Anweisungen enthält, um das Verfahren nach einem der Ansprüche 1 bis 9 durch eine Vorrichtung durchzuführen, wenn das Programm von einem Prozessor der Vorrichtung ausgeführt wird.

15. Speichereinrichtungen, **dadurch gekennzeichnet, dass** sie ein Computerprogramm speichern, das Anweisungen zur Durchführung des Verfahrens nach einem der Ansprüche 1 bis 9 durch eine Vorrichtung enthält, wenn das Programm von einem Prozessor der Vorrichtung ausgeführt wird.

## Claims

1. Method for acknowledging frames sent by endpoints in a group of endpoints intended for an application server, each endpoint in said group communicating with the application server via a gateway and a centralising server, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communication protocol adapted to said third network, **characterised in that** the method is executed by the centralising server and comprises:
providing, by the centralising server to each endpoint of said group, during a phase of connection to the third network implemented by said endpoint, a group identifier,
receiving at least one acknowledgement message sent by the application server, each acknowledgement message acknowledging a plurality of frames sent by endpoints in said group, each acknowledgement message comprising a plurality of fields:
- a first field comprising information allowing timesetting of each endpoint receiving the acknowledgement message,
- a second field comprising information fixing a time of next reawakening of each endpoint receiving the acknowledgement message,
- a third field comprising information representing an identifier of said group, and
- a fourth field comprising information indicating, for each endpoint in said group, whether each frame that it sent to the application server since a previous acknowledgement is acknowledged;
and **in that** the method furthermore comprises:
transmitting a frame in broadcast mode to said group via each gateway making it possible to communicate with an endpoint in said group, said frame comprising, for each field of each acknowledgement message received, information representing the information represented by said field.

2. Method according to claim 1, **characterised in that**, when the centralising server receives a single acknowledgement message, the frame transmitted in broadcast mode comprises the acknowledgement message.

3. Method according to claim 1 or 2, **characterised in that** each frame intended to be transmitted in broadcast mode to said group comprises, in an endpoint address field of said frame, a predefined address, each endpoint receiving a frame comprising the predefined address identifying this frame as a frame sent in broadcast mode.

4. Method according to claim 1, 2 or 3, **characterised in that**, during the connection phase, the centralising server responds to each connection-request frame emanating from an endpoint in said group by a connection-enabling frame transmitted in unicast mode to the endpoint that transmitted the connection-request frame, the connection-enabling frame comprising the identifier of said group in an endpoint address field, a field comprising information enabling timesetting of the endpoint that is the destination of said enabling frame and a field fixing a time of next reawakening of said destination endpoint

5. Method according to claim 4, **characterised in that** the fourth field takes the form of a binary mask wherein each bit corresponds to an endpoint in said group, the endpoint address field of said connection-enabling frame further comprising information indicating to the endpoint that is the destination of said connection-enabling frame a position in the binary mask of the bit corresponding to said destination endpoint.

6. Method according to any one of the preceding claims, **characterised in that**, when the application server implements a plurality of applications, each endpoint in said group being able to contribute to each application in the plurality of applications, each application implemented by the application server being associated with an application number known to each endpoint in said group, each acknowledgement message comprises a fifth field comprising an application identifier for identifying the application among the plurality of applications for which frames are acknowledged.

7. Method for acknowledging frames sent by endpoints in a group of endpoints intended for an application server, each endpoint in said group communicating with the application server via a gateway and a centralising server, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communication protocol adapted to said third network, **characterised in that** the method is executed by an endpoint, referred to as the current endpoint, in said group and comprises:
receiving, from the centralising server, during a phase of connection to the third network implemented by said endpoint, a group identifier,
receiving an acknowledgement frame, the acknowledgement frame having been transmitted in broadcast mode by the centralising server and comprising an acknowledgement message generated from information supplied by the application server, said message being identical for each endpoint in said group and composed of a plurality of fields:
- a first field comprising information allowing timesetting of the current endpoint,
- a second field fixing a time of next reawakening of the current endpoint,
- a third field comprising information representing an identifier of said group, and
- a fourth field comprising information indicating to said current endpoint whether each frame that it has sent to the application server is acknowledged;
setting a clock internal to said endpoint using the first field;
if the identifier represented by the information representing the identifier of said group contained in the third field corresponds to the identifier received by the current endpoint during the connection phase, checking, using the fourth field, that each frame sent since a previous acknowledgement is acknowledged; and
going on standby until the time of next reawakening indicated in the second field.

8. Method for acknowledging frames sent by endpoints in a group of endpoints to an application server, each endpoint in said group communicating with the application server via a gateway and the centralising server, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communication protocol adapted to said third network, **characterised in that** the method executed by the application server comprises:
generating an acknowledgement message, the acknowledgement message comprising a plurality of fields:
- a first field comprising information allowing timesetting of each endpoint receiving said message,
- a second field comprising information fixing a time of next reawakening of each endpoint receiving said message,
- a third field comprising information representing an identifier of said group, said identifier having been supplied by the centralising server to each endpoint in said group during a phase of connection to the third network performed by said endpoint, and
- a fourth field comprising information indicating, for each endpoint in said group, whether each frame that it sent to the application server since a previous acknowledgement is acknowledged; and
sending a frame comprising said message, the information included in each field of said message being intended to be transmitted to each endpoint in the group of endpoints via the centralising server and each gateway enabling the centralising server to communicate with each endpoint in the group of endpoints.

9. Method according to any one of the preceding claims, **characterised in that** the communication protocol adapted to said LoRa network is the LoRaWAN protocol.

10. Device of the centralising server type, making it possible to acknowledge frames sent by endpoints in a group of endpoints to an application server, each endpoint in said group communicating with the application server via a gateway and the centralising server, the application server being connected to the centralising server via a first communication network, the centralising server being connected to each gateway by a second communication network, the group of endpoints and each gateway forming a third network of the long-range wireless LoRa network type affording low energy consumption, each communication between an end point in said group and a gateway using a communication protocol adapted to said third network, **characterised in that** the device comprises:
reception means for receiving an acknowledgement message sent by the application server, said message acknowledging a plurality of frames sent by endpoints in said group, the acknowledgement message comprising a plurality of fields:
- a first field comprising information allowing timesetting of each endpoint receiving said message,
- a second field comprising information fixing a time of next reawakening of each endpoint receiving the payload,
- a third field comprising information representing an identifier of said group, said identifier having been supplied by the centralising server to each endpoint in said group during a phase of connection to the third network performed by said endpoint,
- a fourth field comprising information indicating, for each endpoint in said group, whether each frame that it sent to the application server since a previous acknowledgement is acknowledged; and
transmission means for transmitting a frame in broadcast mode to said group via each gateway making it possible to communicate with an endpoint in said group, said frame comprising, for each field of each acknowledgement message received, information representing the information represented by said field.

11. Device of the endpoint type belonging to a group of endpoints sending frames to an application server, each endpoint in said group communicating with the application server via a gateway and a centralising server, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communication protocol adapted to said third network, **characterised in that** the endpoint, referred to as the current endpoint, comprises:
means for receiving, from the centralising server, an identifier supplied to said endpoint during a phase of connection to the third network implemented by said endpoint,
reception means for receiving an acknowledgement frame, the acknowledgement frame having been transmitted in broadcast mode by the centralising server and comprising an acknowledgement message generated from information supplied by the application server, said message being identical for each endpoint in said group and composed of a plurality of fields:
- a first field comprising information allowing timesetting of the current endpoint,
- a second field fixing a time of next reawakening of the current endpoint,
- a third field comprising information representing an identifier of said group, said identifier having been supplied by the centralising server to the current endpoint during a phase of connection to the third network performed by the current endpoint, and
- a fourth field comprising information indicating to said current endpoint whether each frame that it sent to the application server is acknowledged;
means for setting a clock internal to said current endpoint using the first field;
means for checking, using the fourth field and if the identifier represented by the information representing the identifier of said group contained in the third field corresponds to the identifier received by the current endpoint during the connection phase, that each frame sent is acknowledged; and
standby means for putting the current endpoint on standby until the time of next reawakening indicated in the second field.

12. Device of the application server type adapted to acknowledge frames sent by endpoints in a group of endpoints to said application server, each endpoint in said group communicating with the application server via a gateway and the centralising server, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communications protocol adapted to said third network, **characterised in that** the device comprises:
means for generating an acknowledgement message, the acknowledgement message comprising a plurality of fields, a first field comprising information allowing timesetting of each endpoint receiving said message, a second field fixing a time of next reawakening of each endpoint receiving said message, a third field comprising information representing an identifier of said group, said identifier having been supplied by a centralising server to each endpoint in said group during a phase of connection to the third network performed by said endpoint, and a fourth field comprising information indicating, for each endpoint in said group, whether each frame that it sent to the application server since a previous acknowledgement is acknowledged;
said message being intended to be transmitted to each endpoint in the group of endpoints via a centralising server and each gateway enabling the centralising server to communicate with each endpoint in the group of endpoints.

13. System comprising a group of endpoints according to claim 11, sending frames to an application server according to claim 12, each endpoint in said group communicating with the application server via a gateway and a centralising server according to claim 10, the application server being connected to the centralising server via a first communication network, the centralising server being connected to each gateway by a second communication network, the group of endpoints and each gateway forming a third network of the long-range wireless LoRa network type affording low energy consumption, each communication between an endpoint in said group and a gateway using a communication protocol adapted to said third network.

14. Computer program, **characterised in that** it comprises instructions for implementing, by a device, the method according to any one of claims 1 to 9, when said program is executed by a processor of said device.

15. Storage means, **characterised in that** they store a computer program comprising instructions for implementing, by a device, the method according to any one of claims 1 to 9, when said program is executed by a processor of said device.
